# EUROPÄISCHE PATENTSCHRIFT

(11) **EP 0 787 084 B1**
(45) Veröffentlichungstag und Bekanntmachung des Hinweises auf die Patenterteilung: **05.01.2000**
(21) Anmeldenummer: 95935928.2
(22) Anmeldetag: 11.10.1995
(51) Int. Cl.: B60T 8/36, F15B 13/00

(54) **HYDRAULIKAGGREGAT**
HYDRAULIC CONTROL UNIT
GROUPE HYDRAULIQUE

(30) Priorität: 26.10.1994 DE 4438163
(43) Veröffentlichungstag der Anmeldung: 06.08.1997
(73) Patentinhaber: Continental Teves AG & Co. oHG, 60488 Frankfurt (DE)
(72) Erfinder: VOLZ, Peter, D-64291 Darmstadt (DE); REINARTZ, Hans-Dieter, D-60439 Frankfurt am Main (DE); DINKEL, Dieter, D-65817 Eppstein (DE)
(86) Internationale Anmeldenummer: EP9503998
(87) Internationale Veröffentlichungsnummer: WO9613416

(56) Entgegenhaltungen:
- EP-A- 0 373 551
- EP-A- 0 499 670
- DE-A- 4 118 834
- DE-A- 4 232 205
- DE-A- 4 234 013
- DE-A- 4 239 361

## Beschreibung

Die Erfindung betrifft ein Hydraulikaggregat für eine hydraulische Steuer- oder Regelvorrichtung, insbesondere für schlupfgeregelte Kraftfahrzeugbremsanlagen nach dem Oberbegriff des Anspruchs 1.

Aus der DE 42 34 013 A1 ist bereits ein Hydraulikaggregat der angegebenen Art bekannt. Bei diesem Hydraulikaggregat bedarf es zur Anordnung in einem Kraftfahrzeug besonderer Maßnahmen, um die Spezifikationen zur Funktionstüchtigkeit der Anlage, beispielsweise einem Salzsprühtest und damit den späteren alltäglichen Anforderungen im Betrieb an Salz- und Spritzwasserunempfindlichkeit gerecht zu werden. Zur Erfüllung der Funktionstüchtigkeit sind besondere Korrosionsschutz-, Abdicht- und Ventilationsmaßnahmen erforderlich, die das Aggregat in der Regel verteuern.

Um diesen Gegebenheiten entgegen zu wirken, wären zwar besondere Einbauorte und Einbaulagen des Hydraulikaggregates wünschenswert, diese können jedoch infolge der komplexen Aggregateanordnung im Gesamtverbund des Kraftfahrzeuges und der hohen Integrationsdichte der Systeme im Kraftfahrzeug nicht immer erfüllt werden. Deshalb sind in der Regel alle relevanten Komponenten des Hydraulikaggregates häufig an mehreren Stellen aufwendig abgedichtet und zum Zwecke des Druckausgleichs in den einzelnen Hohlräumen der Komponenten auch separat be- bzw. entlüftet. Eine Vielzahl von Belüftungsstellen führt zwangsläufig zu einer Vielzahl von möglichen Fehlerquellen, die Funktionsstörungen hervorrufen können.

In den Ventil-, Pumpen-, Motor- und Druckspeicherraum eindringendes Salz bzw. Wasser führt zur Ansammlung und ggf. Überflutung der Hohlräume.

Aus der EP-A-373 551 ist bereits ein Hydraulikaggregat für eine hydraulische Steuer- und/oder Regelvorrichtung bekannt geworden, bei dem die Hohlräume der Ventilelemente und der Speicherelemente miteinander verbunden sind. Die Hohlräume sind mittels einer Dichtung an der Abdeckungseinheit von der Atmosphäre isoliert.

Aus der EP-A-499 670 ist ein Ventilsteuergerät zum Steuern von elektromagnetisch betätigten Ventilen, z.B. für ein ABS-Gerät bekannt geworden, das in der Wandung der Abdeckungseinheit eine Belüftungsstelle zum Zweck des Druckausgleichs im Ventilsteuergerät aufweist.

Daher ist es die Aufgabe der Erfindung, ein Hydraulikaggregat zu schaffen, das korrosionsgeschützt, kosten- und gewichtsreduziert und unabhängig von den Anordnungserfordernissen des Gesamtaggregates be- und entlüftet werden kann, ohne daß die einzelnen Hohlräume flüssigkeits- und differenzdruckbeaufschlagt werden.

Diese Aufgabe wird erfindungsgemäß durch die die Patentansprüche 1 und 2 kennzeichnenden Merkmale gelöst.

Eine besonders zuverlässige, leichtbauende und kostengünstige Lösung des bestehenden Problems, wird durch die Merkmale des Anspruchs 3 beschrieben, wonach die Belüftungsstelle einen gasdurchlässige, jedoch Flüssigkeits- und Festkörperpartikel undurchlässigen Wandabschnitt aufweist.

Gemäß Anspruch 4 eignet sich eine atmungsaktive Membran zur Darstellung der Belüftungsstelle.

Die Merkmale des Anspruchs 5 sind auf eine alternative bzw. konstruktive Erweiterung der in den Ansprüchen 1 und 2 angegebenen Einzelheiten ausgerichtet, wonach die Belüftungsstelle ein Rückschlagventil aufweist, das die Hohlräume gegenüber dem Eindringen von Feuchtigkeit abdichtet.

Bei Bedarf eignet sich zweckmäßiger Weise zur sicheren Be- und Entlüftung des Hydraulikaggregates ein Schlauch, der sich an der Belüftungsstelle anschließt und in einen feuchtigkeitsgeschützten Bereich verlegt werden kann.

Die Merkmale des Anspruchs 7 sind auf den konkreten Anschluß zur Atmosphäre des von der Arbeitskammer abgewandten Hohlraums an das gemeinsame Ventilationssystem gerichtet, wonach vom Hohlraum des Speicherelementes ein Druckausgleichskanal zum Hohlraum des Antriebselementes führt, der sich bis zur Belüftungsstelle im Aufnahmekörper erstreckt.

Weitere Ziele, Merkmale, Vorteile und Anwendungsmöglichkeiten der vorliegenden Erfindung ergeben sich aus der nachfolgenden Beschreibung zweier Ausführungsbeispiele.

Es zeigen:
- Figur 1: eine erste Ausführungsform des Ventilationssystems, mit einer zwischen dem Aufnahmekörper und der Abdeckungseinheit angeordneten Belüftungsstelle,
- Figur 2: eine alternative Ausführungsform zu Figur 1, mit in der Abdeckungseinheit angeordneter Belüftungsstelle mit angepaßtem Ventilationssystem.

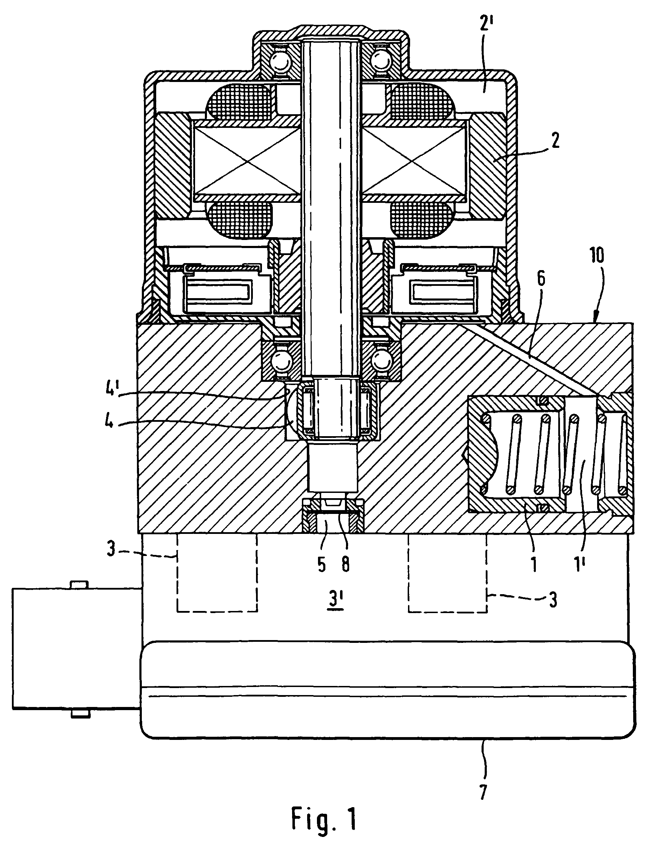

Die Figur 1 zeigt ein Hydraulikaggregat mit einem im Schnitt dargestellten Aufnahmekörper 10 zur Lagerung des Antriebselementes 2, der Ventilelemente 3 und des Speicherelementes 1. Das Antriebselement 2 beteht aus einem Gleichstrommotor, dessen Rotor an einem Wellenende in einem topfförmigen Gehäuse gelagert ist und dessen weiteres Lager in einer Sackbohrung des Aufnahmekörpers 10 geführt ist. Dieses Lager führt die Welle des Antriebselementes 2 in Nähe des Wellenexzenterzapfens, der zur Betätigung eines kolbenförmigen Druckerzeugerelementes 4 ein Nadellager aufweist. Ein weiterer, im Durchmesser verkleinerter Bohrungsabschnitt schließt sich der Lagerstelle des Antriebselementes 2 im Aufnahmekörper 10 an. Dieser bildet die Belüftungsstelle 5, die sich bis zur Oberfläche des Aufnahmekörpers 10 erstreckt. Auf dieser Stirnfläche des Aufnahmekörpers 10 befindet sich eine Abdeckungseinheit 7, die die Ventilelemente 3 atmungsaktiv umschließt. Zur Aufnahme von elektrischen bzw. elektronischen Komponenten ist der Hohlraum 3' unterteilt. In Querlage zum Antriebselement 2 ist das Speicherelement 1 im Aufnahmekörper 10 beweglich ausgerichtet. Der zwischen dem kolbenförmigen Speicherelement 10 und dem zugehörigen Verschlußdeckel gelegene Hohlraum 1' steht über einen Druckausgleichskanal 6 mit dem Hohlraum 2' des Antriebselementes 2 in Verbindung. Hierzu weist die Bürstenplatte des Antriebselementes 2 entsprechende Durchbrüche auf, die eine offene Verbindung zwischen dem Hohlraum 1' und dem Hohlraum 2' herstellen, wobei der Hohlraum 2' des Antriebselementes 2 vorzugsweise über die Spielpassung der Bürstenplatte auf der Antriebswelle und den Abständen zwischen den Lagerkugeln einen druckausgleichenden Verbindungspfad in Richtung des Exzenterraumes (Hohlraum 4') aufweist, dem sich schließlich die Belüftungsstelle 5 anschließt. Damit ist ausschließlich über die zwischen dem Aufnahmekörper 10 und der Abdeckungseinheit 7 vorhandene Belüftungsstelle 5 eine die Hohlräume im Hydraulikaggregat mit der Atmosphäre verbindende offene Stelle vorhanden. Etwaige Druckänderungen im Betrieb des Hydraulikaggregates, die insbesondere durch die Bewegung des Speicherelementes 1 den Hohlraum 1' als Expansions- und Kompressionsraum wirken lassen, werden damit ausschließlich innerhalb eines geschlossenen Ventilationskreislaufes übertragen, wobei die durch Rotation erzeugten Ventilationsströme im Hohlraum 2' den Druckänderungen des Speicherelementes 1 untergeordnet sind. Gleichfalls sind die durch die Kolbenoszillation des Druckerzeugerelementes im Hohlraum 4' wie die durch Rotation des Antriebselementes 2 hervorgerufenen Luftströme infolge ihres gleichbleibenden Verlaufs von untergeordneter Bedeutung, so daß die Be- und Entlüftung und damit die Ventilation im Hydraulikaggregat im wesentlichen durch die diskontinuierliche Arbeitsweise des Speicherelementes 1 bestimmt wird. In der gezeigten Ausführungsform ist die Belüftungsstelle vorzugsweise als atmungsaktive, jedoch Flüssigkeits- und Festkörperpartikel undurchlässiger Wandabschnitt 8 in Form einer Membran ausgebildet, so daß unter allen Betriebszuständen das Eindringen von Schmutz und Flüssigkeit in den feuchte- und schmutzempfindlichen Bereich des Aufnahmekörpers 10 verhindert ist.

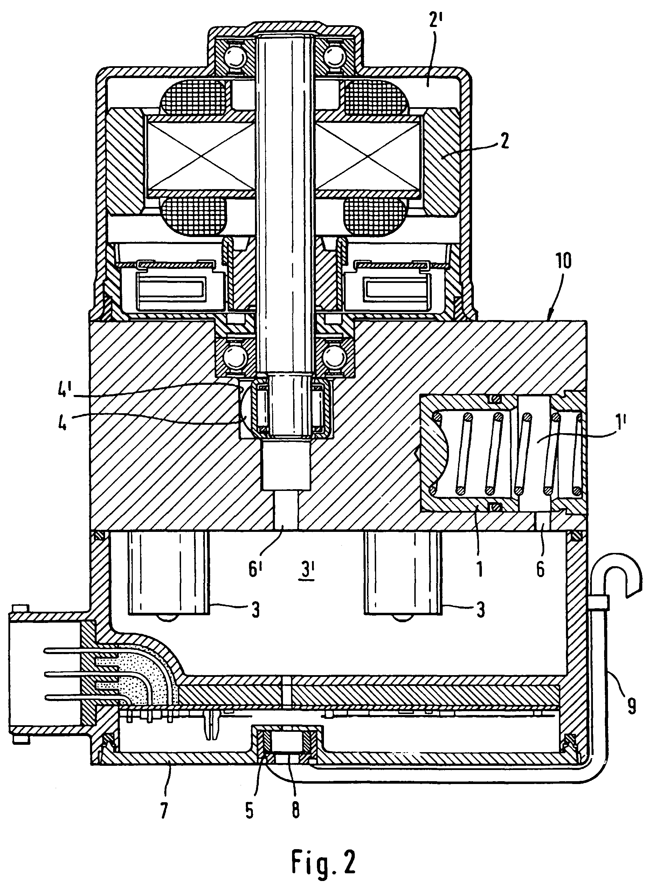

Die Figur 2 zeigt alternativ gegenüber Figur 1, bei weitgehend gleicher Anordnung und Konstruktion der einzelnen Funktionselemente 1, 2, 3, 4 am Aufnahmekörper 10, eine Abwandlung des Ventilationssystems, wozu, im Gegensatz zu Figur 1, in Figur 2 ein Druckausgleichskanal 6 vom Hohlraum 1' des Speicherelementes 1 nicht in den Hohlraum 2' des Antriebselementes 2 einmündet, sondern direkt in den Hohlraum 3', der innerhalb der Abdeckungseinheit 7 die Ventilelemente 3 umgibt. Damit ergibt sich vorteilhaft eine unmittelbare Übertragung etwaiger Druckpulsationen des Speicherelementes 1 in den relativ großen Hohlraum 3' und über die in der Abdeckungseinheit 7 angebrachte Belüftungsstelle 5 zur Atmosphäre. Ein weiterer Druckausgleichskanal 6' im Aufnahmekörper 10 stellt eine atmungsaktive Verbindung zum Hohlraum 4' (Exzenterraum) und zum Hohlraum 2' des Antriebselementes 2 her. Beide Druckausgleichskanäle 6, 6' münden folglich unabhängig voneinander in den Hohlraum 3', der im gezeigten Ausführungsbeispiel von einem dichtend am Aufnahmekörper 10 anliegenden Gehäuse begrenzt ist. In der Abbildung ist zwar die Abdeckungseinheit 7 nicht als einteiliges Bestandteil des Gehäuses ausgebildet, sie übernimmt aber dennoch primär eine Schutzfunktion für alle im Hohlraum 3' befindlichen elektrischen bzw. elektronischen Elemente. Die Belüftungsstelle 5 nimmt im gezeigten Ausführungsbeispiel eine atmungsaktive Membran auf, die den gasdurchlässigen, jedoch Flüssigkeits- und Festkörperpartikel undurchlässigen Wandabschnitt 8 bildet. An ihr schließt sich beispielhaft gezeigt ein Schlauch 9 an, der unabhängig von der abbildungsgemäßen wellensenkrechten Positionierung des Hydraulikaggregates eine Flüssigkeits- und vor Schmutzpartikel geschützte Be- und Entlüftung des Hydraulikaggregates gewährleistet. Damit ergibt sich gleichfalls nur eine einzige außenliegende Belüftungsstelle am Hydraulikaggregat, so daß alle Funktionselemente am Aufnahmekörper 10 abgedichtet sind. Soweit nicht auf alle Einzelheiten der in Figur 2 abgebildeten Ausführungsform des Hydraulikaggregates eingegangen wurde, wird auf die Beschreibung der Ausführungsform nach Figur 1 hingwiesen.

Die Vorteile der Erfindung sind somit in der Vereinfachung der bisher verwendeten einzelnen Abdicht- bzw. Belüftungsmaßnahmen zu sehen, wodurch anstatt mehrerer Belüftungsstellen nur noch eine einzige nötig ist und aufwendige Abdichtungsmaßnahmen, beispielsweise mittels O-Ringe, entfallen können, sofern die betreffenden Teile metallisch dicht miteinander verbunden werden können. Dies führt überdies zur Bauteilreduzierung, leichtere Prüfbarkeit, erhöhte Funktionssicherheit, Realisiserung der Tauchfähigkeit des Hydraulikaggregates und insbesondere zu einer besseren Belüftung des Speicherelementes, wodurch bei Verwendung des Hydraulikaggregates für elektronisch geregelte Kraftfahrzeug-Bremsanlagen gleichbleibend minimale Hydraulikdrücke nach Abschluß der Druckabbauphase gewährleistet sind.

### Bezugszeichenliste

- 1: Speicherelement
- 1': Hohlraum
- 2: Antriebselement
- 2': Hohlraum
- 3: Ventilelement
- 3': Hohlraum
- 4: Druckerzeugerelement
- 4': Hohlraum
- 5: Belüftungsstelle
- 6,6': Druckausgleichskanal
- 7: Abdeckungseinheit
- 8: Wandabschnitt
- 9: Schlauch
- 10: Aufnahmekörper

## Patentansprüche

1. Hydraulikaggregat für eine hydraulische Steuer- und/oder Regelvorrichtung, insbesondere für schlupfgeregelte Kraftfahrzeugbremsanlagen, mit mehreren, in mehreren Hohlräumen (1',2',3',4') eines Aufnahmekörpers (10) angeordneten hydraulischen, mechanischen und/oder elektrisch betätigbaren Funktionselementen (1,2,3,4), wie Speicher-, Ventil-, Druckerzeuger- und Antriebselemente, mit mehreren die Funktionselemente (1,2,3,4) miteinander verbindenden Druckmittelkanälen, die eine hydraulisch schaltbare Verbindung zwischen wenigstens einer Druckmittelquelle und einem Druckmittelverbraucher herzustellen vermögen, sowie mit einer Verbindung zu einer Steuervorrichtung zur Betätigung der Funktionselemente (1,2,3,4), **dadurch gekennzeichnet**, daß mehrere den Funktionselementen (1,2,3,4) zugeordnete Hohlräume (1',2',3',4') an ein gemeinsames Ventilationssystem angeschlossen sind, das die Be- und Entlüftung der Hohlräume (1 bis 4') zum Druckausgleich mit der Atmosphäre ausschließlich über eine Belüftungsstelle (5) ermöglicht, die mit wenigstens einem Druckausgleichskanal (6,6') des Ventilationssystems in Verbindung steht, daß die Stirnfläche des Aufnahmekörpers (10) von einer Abdeckungseinheit (7) begrenzt ist, wobei zwischen den Stirnflächen des Aufnahmekörpers (10) und der Abdeckungseinheit (7) die Belüftungsstelle (5) gelegen ist.

2. Hydraulikaggregat für eine hydraulische Steuer- und/-oder Regelvorrichtung, insbesondere für schlupfgeregelte Kraftfahrzeugbremsanlagen, mit mehreren, in mehreren Hohlräumen (1',2',3',4') eines Aufnahmekörpers (10) angeordneten hydraulischen, mechanischen und/oder elektrisch betätigbaren Funktionselementen (1,2,3,4), wie Speicher-, Ventil-, Druckerzeuger- und Antriebselemente, mit mehreren die Funktionselemente (1,2,3,4) miteinander verbindenden Druckmittelkanälen, die eine hydraulisch schaltbare Verbindung zwischen wenigstens einer Druckmittelquelle und einem Druckmittelverbraucher herzustellen vermögen, sowie mit einer Verbindung zu einer Steuervorrichtung zur Betätigung der Funktionselemente(1,2,3,4), wobei die Belüftungsstelle (5) in der Wand der Abdeckungseinheit (7) angebracht ist, **dadurch gekennzeichnet**, daß der mit dem Hohlraum (1') des Speicherelements (1) in Verbindung stehende Druckausgeichskanal (6) unmittelbar in einen die Ventilelemente (3) aufweisenden Hohlraum (3') einmündet, der innerhalb einer Abdeckungseinheit (7) angeordnet ist, in den ein den Antriebselement (2) und den Druckerzeugerelement (4) zugeordneter weiterer Druckausgleichskanal (6') einmündet.

3. Hydraulikaggregat nach Anspruch 1 oder 2, **dadurch gekennzeichnet**, daß die Belüftungsstelle (5) eine gasdurchlässige, jedoch Flüssigkeits- und Festkörperpartikel undurchlässigen Wandabschnitt (8) aufweist.

4. Hydraulikaggregat nach Anspruch 3, **dadurch gekennzeichnet**, daß die Belüftungsstelle (5) eine atmungsaktive Membran aufnimmt.

5. Hydraulikaggregat nach den vorangegangenen Ansprüchen 1 oder 2, **dadurch gekennzeichnet**, daß die Belüftungsstelle (5) ein Rückschlagventil aufweist, das die Hohlräume (1' bis 4') gegen Feuchtigkeit abdichtet.

6. Hydraulikaggregat nach Anspruch 2, **dadurch gekennzeichnet**, daß sich an der Belüftungsstelle (5) ein Schlauch (9) anschließt.

7. Hydraulikaggregat nach Anspruch 1, **dadurch gekennzeichnet**, daß der von einer Arbeitskammer des Speicherelementes (1) abgewandte Hohlraum (1') über einen Druckausgleichskanal (6) im Aufnahmekörper (10) mit dem Hohlraum (2') des Antriebselementes (2) in Verbindung steht, der sich bis zur Belüftungsstelle (5) im Bereich der Stirnfläche des Aufnahmekörpers (10) erstreckt.

## Claims

1. Hydraulic assembly for a hydraulic controlling and/or regulating device, in particular for slip-controlled automotive vehicle brake systems, which includes a plurality of hydraulic, mechanical and/or electrically operable functional elements (1, 2, 3, 4), such as accumulator elements, valve elements, pressure-generating and drive elements, which are arranged in a plurality of hollow chambers (1', 2', 3', 4') of an accommodating member (10), a plurality of pressure fluid channels which interconnect the functional elements (1, 2, 3, 4) and are adapted to provide a hydraulically operable connection between at least one pressure fluid source and a pressure fluid consumer, and a connection to a controlling device for the actuation of the functional elements (1, 2, 3, 4),
**characterized** in that a plurality of hollow chambers (1', 2', 3', 4') associated with the functional elements (1, 2, 3, 4) are connected to a joint ventilation system which permits ventilation and bleeding of the hollow chambers (1 to 4') for the pressure balance with the atmosphere exclusively by way of a point of ventilation (5) which is connected to at least one pressure compensation channel (6, 6') of the ventilation system, and in that the end surface of the accommodating member (10) is confined by a cover unit (7), and the point of ventilation (5) is positioned between the end surfaces of the accommodating member (10) and the cover unit (7).

2. Hydraulic assembly for a hydraulic controlling and/or regulating device, in particular for slip-controlled automotive vehicle brake systems, which includes a plurality of hydraulic, mechanical and/or electrically operable functional elements (1, 2, 3, 4), such as accumulator elements, valve elements, pressure-generating and drive elements, which are arranged in a plurality of hollow chambers (1', 2', 3', 4') of an accommodating member (10), a plurality of pressure fluid channels which interconnect the functional elements (1, 2, 3, 4) and are adapted to provide a hydraulically operable connection between at least one pressure fluid source and a pressure fluid consumer, and a connection to a controlling device for the actuation of the functional elements (1, 2, 3, 4), the point of ventilation (5) being provided in the wall of the cover unit (7),
**characterized** in that the pressure compensation channel (6) which is connected to the hollow chamber (1') of the accumulator element (1) terminates directly into a hollow chamber (3') which accommodates the valve elements (3) and is arranged within a cover unit (7), and another pressure compensation channel (6') associated with the drive element (2) and the pressure-generating element (4) terminates into the hollow chamber (3').

3. Hydraulic assembly as claimed in claim 1 or claim 2,
**characterized** in that the point of ventilation (5) has a gas-permeable wall portion (8) which is, however, impermeable to fluid and solid particles.

4. Hydraulic assembly as claimed in claim 3,
**characterized** in that the point of ventilation (5) accommodates a breathing diaphragm.

5. Hydraulic assembly as claimed in the preceding claims 1 or 2,
**characterized** in that the point of ventilation (5) has a non-return valve which seals the hollow chambers (1' to 4') against moisture.

6. Hydraulic assembly as claimed in claim 2,
**characterized** in that a hose (9) is connected to the point of ventilation (5).

7. Hydraulic assembly as claimed in claim 1,
**characterized** in that the hollow chamber (1') remote from a working chamber of the accumulator element (1) is connected to the hollow chamber (2') of the drive element (2) by way of a pressure compensation channel (6) in the accommodating member (10), the hollow chamber (2') extending up to the point of ventilation (5) in the area of the end surface of the accommodating member (10).

## Revendications

1. Bloc hydraulique, pour dispositif de commande et/ou de régulation hydraulique, notamment pour systèmes de freinage de véhicule automobile à régulation du glissement, comprenant plusieurs éléments fonctionnels (1, 2, 3, 4) à commande hydraulique, mécanique et/ou électrique disposés dans plusieurs cavités (1', 2', 3', 4') d'un corps de logement (10), tels qu'élément d'accumulateur, élément de valve, élément de générateur de pression et élément d'entraînement, comportant plusieurs conduits d'agent de pression qui font communiquer entre eux les éléments fonctionnels (1, 2, 3, 4) et qui permettent d'assurer une communication hydraulique, pouvant faire l'objet d'une commutation, entre au moins une source d'agent de pression et un utilisateur d'agent de pression, et une liaison avec un dispositif de commande servant à actionner les éléments fonctionnels (1, 2, 3, 4), caractérisé en ce que plusieurs cavités (1', 2', 3', 4') associées aux éléments fonctionnels (1, 2, 3, 4) sont raccordées à un système commun de ventilation qui permet la mise à l'air et la désaération des cavités (1' à 4') servant à l'équilibre de pression avec l'atmosphère, exclusivement au moyen d'un emplacement de mise à l'air (5) qui communique avec au moins un conduit d'équilibre de pression (6, 6') du système de ventilation et ce que la surface frontale du corps de logement (10) est délimitée par une unité de recouvrement (7), l'emplacement de mise à l'air (5) étant disposé entre les surfaces frontales du corps de logement (10) et de l'unité de recouvrement (7).

2. Bloc hydraulique, pour dispositif de commande et/ou de régulation hydraulique, notamment pour systèmes de freinage de véhicule automobile à régulation du glissement, comprenant plusieurs éléments fonctionnels (1, 2, 3, 4) à commande hydraulique, mécanique et/ou électrique disposés dans plusieurs cavités (1', 2', 3', 4') d'un corps de logement (10), tels qu'élément d'accumulateur, élément de valve, élément de générateur de pression et élément d'entraînement, comportant plusieurs conduits d'agent de pression qui font communiquer entre eux les éléments fonctionnels (1, 2, 3, 4) et qui permettent d'assurer une communication hydraulique, pouvant faire l'objet d'une commutation, entre au moins une source d'agent de pression et un utilisateur d'agent de pression, et une liaison avec un dispositif de commande servant à actionner les éléments fonctionnels (1, 2, 3, 4), l'emplacement de mise à l'air (5) étant disposé dans la paroi de l'unité de recouvrement (7), caractérisé en ce que le conduit d'équilibre de pression (6) communiquant avec la cavité (1') de l'élément d'accumulateur (1) débouche directement dans une cavité (3') qui comporte les éléments de valve (3), qui est disposée à l'intérieur d'une unité de recouvrement (7) et dans laquelle débouche un autre conduit d'équilibre de pression (6') associé à l'élément d'entraînement (2) et à l'élément de générateur de pression (4).

3. Bloc hydraulique suivant la revendication 1 ou 2, caractérisé en ce que l'emplacement de mise à l'air (5) comprend une partie de paroi (8) perméable aux gaz, mais imperméable aux liquides et aux particules de matière solide.

4. Bloc hydraulique suivant la revendication 3, caractérisé en ce que l'emplacement de mise à l'air (5) loge une membrane qui respire.

5. Bloc hydraulique suivant les revendications 1 et 2 précédentes, caractérisé en ce que l'emplacement de mise à l'air (5) comprend une valve antiretour qui assure l'étanchéité des cavités (1' à 4') vis-à-vis de l'humidité.

6. Bloc hydraulique suivant la revendication 2, caractérisé en ce qu'un tuyau souple (9) se raccorde à l'emplacement de mise à l'air (5).

7. Bloc hydraulique suivant la revendication 1, caractérisé en ce que la cavité (1') qui est opposée à une chambre de travail de l'élément d'accumulateur (1) communique, par l'intermédiaire d'un conduit d'équilibre de pression (6) ménagé dans le corps de logement (10), avec la cavité (2') de l'élément d'entraînement (2) qui s'étend jusqu'à l'emplacement de mise à l'air (5) dans la zone de la surface frontale du corps de logement (10).
